Europäisches Patentamt

European Patent Office

Office européen des brevets

(11) Numéro de publication: **0 555 606 B1**

(12) **FASCICULE DE BREVET EUROPEEN**

(45) Date de publication de fascicule du brevet: **07.06.95** (51) Int. Cl.⁶: **B60B 17/00**

(21) Numéro de dépôt: **92403460.6**

(22) Date de dépôt: **17.12.92**

(54) **Roue monobloc allégée pour véhicule ferroviaire résistant au déjettement.**

(30) Priorité: **10.02.92 FR 9201466**

(43) Date de publication de la demande:
**18.08.93 Bulletin 93/33**

(45) Mention de la délivrance du brevet:
**07.06.95 Bulletin 95/23**

(84) Etats contractants désignés:
**AT BE CH DE DK ES FR GB IE IT LI NL PT SE**

(56) Documents cités:
**EP-A- 0 416 103    DE-B- 1 107 694**
**FR-A- 2 254 447    FR-A- 2 485 993**
**US-A- 3 127 212    US-A- 4 145 079**

(73) Titulaire: **VALDUNES**
**Immeuble Elysées la Défense,**
**La Défense,**
**29 Le Parvis**
**F-92800 Puteaux (FR)**

(72) Inventeur: **Catot, Bernard**
**260 allée de Lestran**
**F-59940 Leffrinckoucke (FR)**
Inventeur: **Bocquet, Jacques**
**50 rue P. Leostic**
**F-59240 Dunkerque (FR)**

(74) Mandataire: **Bouget, Lucien et al**
**Cabinet Lavoix**
**2, Place d'Estienne d'Orves**
**F-75441 Paris Cédex 09 (FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

**Description**

La présente invention est relative à une roue monobloc pour véhicule ferroviaire et notamment pour train à grande vitesse résistant au déjettement.

On connaît de très nombreuses roues monobloc pour véhicule sur rail composées d'un moyeu, d'une jante et d'un disque ou toile assurant la liaison entre le moyeu et la jante. Toutes ces roues peuvent se classer en deux catégories :
- les roues à moyeu, jante et toile centrés par rapport à un même plan médian perpendiculaire à l'axe de la roue,
- les roues à moyeu, jante et toile décentrés.

La première catégorie a l'avantage de permettre l'utilisation de fusées d'essieu courtes donc peu sensibles à la fatigue en flexion rotative, mais qui entraînent des contraintes importantes dans la toile en particulier au moment du freinage ; du fait de ces contraintes, les roues doivent avoir des toiles relativement épaisses et sont donc lourdes.

La deuxième catégorie conduit à des contraintes au cours du freinage beaucoup plus faibles ce qui permet de diminuer l'épaisseur de la toile et donc d'alléger la roue ; en revanche, ces roues nécessitent des fusées longues plus sensibles à la fatigue en flexion rotative que les fusées courtes.

Or, en particulier pour les trains à grande vitesse, il est souhaitable tout à la fois de limiter au maximum les masses non suspendues, donc d'alléger les roues, et de limiter le plus possible la sensibilité à la fatigue en flexion rotative des fusées.

De plus, les roues de véhicule ferroviaire qui sont montées deux par deux aux extrémités d'un essieu, de manière que leurs surfaces de roulement aient pour écartement la distance entre les rails de circulation du véhicule, sont soumises lors du freinage du véhicule à un échauffement qui peut produire une déformation des roues appelée déjettement. Le déjettement se traduit par un basculement de la surface de roulement des roues par rapport à un plan perpendiculaire à l'axe des roues, généralement vers l'extérieur de l'essieu monté.

Les roues de véhicules ferroviaires connues ont généralement une résistance médiocre au déjettement.

On connaît par le FR-A-2.254.447 une roue monobloc pour véhicule ferroviaire comprenant une jante munie d'un boudin en saillie par rapport à sa surface de roulement sur un de ses côtés latéraux, un moyeu et une toile, la jante et le moyeu étant limités latéralement par des faces planes symétriques l'une de l'autre par rapport à un même plan radial médian perpendiculaire à l'axe de la roue et la toile étant décentrée, c'est-à-dire non symétrique par rapport au plan radial médian.

Une telle roue ne permet pas de résoudre de manière optimale les problèmes relatifs à la fatigue en flexion rotative, et à l'échauffement et aux contraintes responsables du déjettement.

L'invention a donc pour but de proposer une roue allégée résistant au déjettement et limitant la fatigue en flexion rotative de la fusée.

L'objet de l'invention est une roue monobloc pour véhicule ferroviaire, notamment pour train à grande vitesse du type comprenant une jante munie d'un boudin en saillie par rapport à sa surface de roulement sur un de ses côtés latéraux, un moyeu et une toile, la jante et le moyeu étant limités latéralement par des faces planes symétriques l'une de l'autre par rapport à un même plan radial médian BB' perpendiculaire à l'axe AA' de la roue, et la toile étant décentrée, c'est-à-dire non symétrique par rapport audit plan radial médian BB', caractérisée en ce que, en section axiale, la zone de liaison entre la toile et la jante ainsi que le point C de rencontre de la courbe génératrice de la toile avec la génératrice de la partie interne de la jante sont situés, par rapport au plan radial médian, du côté opposé au boudin et en ce que la zone de liaison entre la toile et le moyeu ainsi que le point D de rencontre de la courbe génératrice de la toile avec la surface externe du moyeu sont situés, par rapport au plan radial médian, du même côté que le boudin.

La courbe génératrice de la toile qui est la courbe médiane de la section méridienne de la toile comporte un point d'inflexion I. En appelant I la distance du point d'inflexion I à la surface externe du moyeu dans la direction radiale de la roue, L la distance radiale entre la surface externe du moyeu et la partie interne de la jante, h la distance dans la direction axiale du point d'inflexion I au plan perpendiculaire à l'axe de la roue et passant par le point C de rencontre de la courbe génératrice de la toile avec la partie interne de la jante, H la distance axiale entre le point D de rencontre de la courbe génératrice de la toile avec la surface externe du moyeu, et le plan perpendiculaire à l'axe de la roue passant par le point de rencontre C de la courbe génératrice de la toile avec la partie interne de la jante, la position du point d'inflexion I est caractérisée par les relations :

$$\frac{l}{L} > \frac{1}{2} \text{ et } \frac{h}{H} < \frac{1}{2}$$

2

De préférence, la courbe génératrice de la toile est une courbe d'équation

$$y = y_c + (x - L)^2 \, (\underline{\frac{H}{L^3}} \, (2x + L) + x^2 \, (\alpha x + \beta))$$

$\alpha$ et $\beta$ étant solutions du système de deux équations à deux inconnues :

$$\alpha \, l \, (10 \, l^2 - 12 \, l \, L + 3 \, L^2) + \beta \, (6 \, l^2 - 6 \, l \, L + L^2) = \frac{3H}{L^2} \, (1 - \frac{2l}{L}).$$

$$l^3 \, \alpha + l^2 \, \beta = \frac{h}{(L-l)^2} - \frac{H}{L^3} \, (2l + L)$$

dans ces équations,

x représente la distance radiale d'un point de la courbe génératrice à la surface externe du moyeu,

y représente la distance algébrique d'un point de la courbe génératrice parallèlement à l'axe de la roue, au plan médian du moyeu et de la jante,

$y_c$ est la distance algébrique du point C de jonction de la courbe génératrice et de la partie interne de la jante au plan précédemment défini,

l, L, h, H sont les grandeurs définies précédemment.

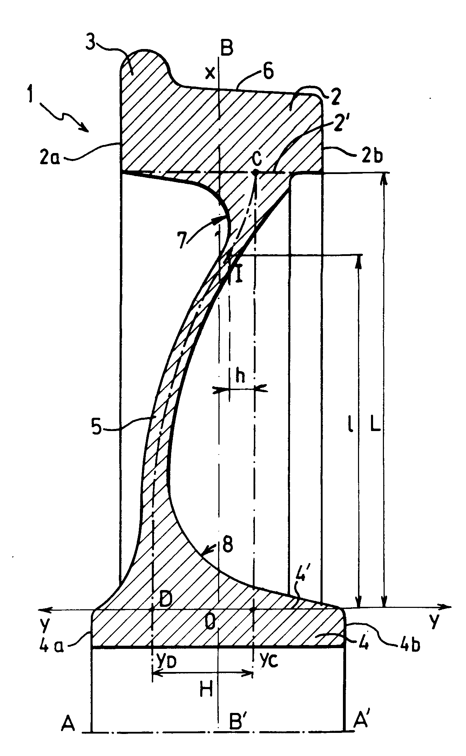

La figure 1 est une demi-vue en coupe d'une roue selon l'invention, par un plan passant par l'axe de rotation de la roue.

La roue repérée généralement par 1 est symétrique de révolution autour de l'axe AA'. Elle comporte une jante 2 comportant une partie en saillie par rapport à sa surface de roulement 6 sur un de ses côtés latéraux constituant un boudin 3, un moyeu 4 et une toile 5. La jante 2 est délimitée latéralement par deux faces sensiblement planes 2a et 2b. De même, le moyeu 4 est délimité latéralement par deux faces sensiblement planes 4a et 4b.

La roue peut être considérée comme construite autour d'un plan médian perpendiculaire à l'axe AA' et dont l'intersection avec le plan de coupe est la droite BB'. Si l'on excepte le boudin 3 et le profil d'usinage de la surface de roulement 6, le plan passant par BB' est un plan de symétrie à la fois pour la jante 2 et pour le moyeu 4. Les faces 2a, 2b de la jante 2 d'une part et 4a, 4b du moyeu d'autre part sont parallèles et situées de part et d'autre et à une même distance du plan BB'. On dit que la roue est à jante et à moyeu centrés.

Par contre, la toile 5 est construite autour d'une surface gauche de révolution dont l'intersection avec le plan de coupe axial est la courbe génératrice CD. Cette courbe n'est pas rectiligne et c'est une courbe généralement médiane pour la section méridienne de la toile de la roue représentée sur la figure 1 ; on l'appellera courbe génératrice de la toile. Le point C représente le point de jonction de la toile et de la jante ; le point C est situé à l'intersection de la courbe génératrice avec la génératrice 2' de la partie interne de la jante 2 constituée par une surface cylindrique d'axe AA' ; par rapport au plan médian passant par BB', il est déporté du côté opposé au boudin 3. Le point D représente le point de jonction de la toile et du moyeu ; le point D est situé à l'intersection de la courbe génératrice avec la génératrice 4' de la surface externe du moyeu 4 constituée par une surface cylindrique d'axe AA' ; par rapport au plan passant par BB', il est déporté du côté du boudin 3.

On dit que la toile 5 dont le plan de trace 11' n'est pas un plan de symétrie, est décentrée.

On obtient ainsi une roue à jante et moyeu centrés et à toile décentrée.

Le moyeu et la jante étant centrés, la fusée de l'essieu sur lequel est montée la roue est courte et de ce fait les efforts de flexion sont limités, ainsi, la fusée de l'essieu de cette roue subit une fatigue en flexion rotative limitée ; la roue présente donc une bonne tenue en service.

La toile étant décentrée, la surface qu'elle offre pour le refroidissement au cours du freinage est plus grande que celle d'une roue à toile centrée. Cette plus grande surface conduit à un échauffement moindre et à des contraintes thermiques moindres.

De plus, on a constaté qu'en décentrant la toile de la façon indiquée par la présente invention, on réduit notablement les contraintes dans les zones de raccordement 7 et 8 par rapport à une roue à toile centrée ou une roue à toile décentrée dans une disposition inverse et symétrique de la disposition suivant l'invention, c'est-à-dire avec une zone de raccordement de la toile et de la jante du côté du boudin et une zone de raccordement de la toile et du moyeu du côté opposé au boudin, ainsi qu'il ressort de calculs de simulation. Il est ainsi possible de réduire l'épaisseur de la toile et d'alléger la roue.

Pour la roue objet de l'invention, la courbe génératrice peut être représentée dans le repère (ox, oy), o étant le point d'intersection de la droite BB' avec la génératrice 4' du cylindre constituant la surface externe du moyeu, x la distance radiale d'un point de la courbe génératrice au point o, y la distance de ce point au point o le long de la génératrice du moyeu.

Cette courbe présente en D (x = o) une tangente parallèle à la doite ox. Elle présente également au point C d'abscisse $x_c$ = L, une tangente parallèle à ox.

La courbe CD présente de plus entre D et C un point d'inflexion I.

Soient :

$x_D$ = o et $y_D$ les coordonnées du point D
$x_I$ = l et $y_I$ les coordonnées du point I
$x_C$ = L et $y_C$ les coordonnées du point C

dans le repère (ox, oy).

On pose :

$y_I - y_C = h$
$y_D - y_C = H.$

On a constaté que pour minimiser les contraintes dans la toile de la roue en particulier lors du freinage par application d'un sabot sur la jante, il fallait que :

H soit le plus grand possible

et qu'on ait :

$h/H < 1/2$
$l/L > 1/2$

c'est-à-dire que le point d'inflexion I soit déporté d'une part vers la jante 2 et d'autre part vers le côté opposé au boudin 3.

La courbe DC se représente par l'équation suivante :

$$y = y_c + (x - L)^2 \left( \frac{H}{L^3} (2x + L) + x^2 (\alpha x + \beta) \right)$$

$\alpha$ et $\beta$ étant solutions du système de deux équations à deux inconnues :

$$\alpha \, l \, (10 \, l^2 - 12 \, l \, L + 3 \, L^2) + \beta \, (6 \, l^2 - 6 \, l \, L + L^2) = \frac{3H}{L^2} \left( 1 - \frac{2l}{L} \right).$$

$$l^3 \, \alpha + l^2 \, \beta = \frac{h}{(L-l)^2} - \frac{H}{L^3} (2l + L)$$

Dans ces équations les symboles ont les significations données plus haut.

Avec une courbe de ce type, on a réalisé une roue de diamètre extérieur 920 mm dont le poids de 292 kg est inférieur de 86 kg au poids d'une roue à jante, moyeu et toile centrés de même diamètre et pouvant supporter la même charge. De plus, les contraintes maximales enregistrées dans la jante lors de freinages intensifs sont sensiblement inférieures à celles auxquelles sont soumises les roues selon l'art antérieur.

Il en résulte que la roue objet de l'invention est moins sujette au déjettement que les roues de l'art antérieur. Les inventeurs ont constaté que plus le point C de raccordement de la toile avec la jante est

4

reporté vers l'extérieur (c'est-à-dire à l'opposé du boudin) et plus le point D de raccordement de la toile avec le moyeu est reporté vers l'intérieur (c'est-à-dire du côté du boudin) plus la roue peut être échauffée longtemps avant qu'un déjettement apparaisse.

**Revendications**

1. Roue monobloc pour véhicule ferroviaire, notamment pour train à grande vitesse du type comprenant une jante (2) munie d'un boudin (3) en saillie par rapport à sa surface de roulement (6) sur un de ses côtés latéraux, un moyeu (4) et une toile (5), la jante (2) et le moyeu (4) étant limités latéralement par des faces planes symétriques l'une de l'autre par rapport à un même plan radial médian (BB') perpendiculaire à l'axe AA' de la roue, et la toile (5) étant décentrée, c'est-à-dire non symétrique par rapport audit plan radial médian (BB'), caractérisée en ce que, en section axiale, la zone de liaison entre la toile (5) et la jante (2) ainsi que le point (C) de rencontre de la courbe génératrice de la toile (5) avec la génératrice (2') de la partie interne de la jante (2) sont situés, par rapport au plan radial médian, du côté opposé au boudin (3) et en ce que la zone de liaison entre la toile (5) et le moyeu (4) ainsi que le point (D) de rencontre de la courbe génératrice de la toile (5) avec la surface externe du moyeu (4) sont situés, par rapport au plan radial médian, du même côté que le boudin (3).

2. Roue selon la revendication 1, caractérisée en ce que la courbe génératrice de la toile (5) comporte un point d'inflexion I, et en ce que la position du point d'inflexion I est caractérisée par les relations :

l/L > 1/2, h/H < 1/2,

l étant la distance radiale du point d'inflexion I à la surface externe du moyeu (4), L la distance radiale entre la surface externe du moyeu (4) et la partie interne de la jante (2), h la distance axiale du point d'inflexion I à un plan perpendiculaire à l'axe AA' de la roue et passant par le point C de rencontre de la courbe génératrice de la toile (5) avec la partie interne de la jante (2) et H la distance du point D de rencontre de la courbe génératrice de la toile (5) avec la surface externe du moyeu (4) au plan perpendiculaire à l'axe AA' de la roue passant par le point C de rencontre de la courbe génératrice de la toile (5) avec la partie interne de la jante (2).

3. Roue selon la revendication 2, caractérisée en ce que la courbe génératrice de la toile (5) est une courbe d'équation :

$$Y = Y_c + (x - L)^2 \left( \frac{H}{L^3} (2x + L) + x^2 (\alpha x + \beta) \right)$$

$\alpha$ et $\beta$ étant solutions du système de deux équations à deux inconnues :

$$\alpha \, l \, (10 \, l^2 - 12 \, l \, L + 3 \, L^2) + \beta \, (6 \, l^2 - 6 \, l \, L + L^2) = \frac{3H}{L^2} \left( 1 - \frac{2l}{L} \right).$$

$$l^3 \, \alpha + l^2 \, \beta = \frac{h}{(L-l)^2} - \frac{H}{L^3} (2l + L)$$

x étant la distance radiale d'un point de la courbe génératrice à la surface externe du moyeu (4),
y étant la distance algébrique d'un point de la courbe génératrice dans la direction axiale de la roue, au plan médian BB' du moyeu (4) et de la jante (2),
$y_c$ étant la distance algébrique dans la direction axiale entre le point C de rencontre de la courbe génératrice avec la partie interne de la jante (2) et le plan médian BB'.

5

**Claims**

1. A solid wheel for a railway vehicle, in particular for a high-speed train, comprising a rim (2) with a flange (3) projecting beyond its rolling surface (6) on one of its sides, a hub (4) and a web (5), rim (2) and hub (4) being limited laterally by plane faces symmetrical to each other about the same median radial plane (BB') perpendicular to axis AA' of the wheel, and web (5) being off-centred, i.e. not symmetrical about the said median radial plane (BB'), characterised in that, in an axial section, the joining area between web (5) and rim (2) as well as meeting point (C) of the generating curve of web (5) with generatrix (2') of the inner pact of rim (2) are located, about the median radial plane, on the side opposite flange (3) and in that the joining area between web (5) and hub (4) as well as meeting point (D) of the generating curve of web (5) with the outer surface of hub (4) are located, in relation to the median radial plane, on the same side as flange (3).

2. A wheel according to Claim 1, characterised in that the generating curve of web (5) has a point of inflexion I, and in that the position of point of inflexion I is characterised by relations:

   l/L > 1/2, h/H < 1/2,

   l being the radial distance of point of inflexion I to the outer surface of hub (4), L the radial distance between the outer surface of hub (4) and the inner part of rim (2), h the axial distance of point of inflexion I to a plane perpendicular to axis AA' of the wheel and passing through meeting point C of the generating curve of web (5) with the inner part of rim (2) and H the distance of meeting point D of the generating curve of web (5) with the outer surface of hub (4) to the plane perpendicular to axis AA' of the wheel passing through meeting point C of the generating curve of web (5) with the inner part of rim (2).

3. A wheel according to Claim 2, chracterised in that the generating curve of web (5) is a curve with an equation:

$$Y = Y_c + (x - L)^2 \left( \frac{H}{L^3} (2x + L) + x^2 (\alpha x + \beta) \right)$$

   alpha and beta being solutions of the system of two equations with two unknowns:

$$\alpha\, l\, (10\, l^2 - 12\, l\, L + 3\, L^2) + \beta\, (6\, l^2 - 6\, l\, L + L^2) = \frac{3H}{L^2} \left( 1 - \frac{2l}{L} \right).$$

$$l^3\, \alpha + l^2\, \beta = \frac{h}{(L-l)^2} - \frac{H}{L^3} (2l + L)$$

   x being the radial distance of a point on the generating curve to the outer surface of hub (4),
   y being the algebraic distance of a point on the generating curve in the axial direction of the wheel, to the median plane BB' of hub (4) and rim (2),
   Yc being the algebraic distance in the axial direction between meeting point C of the generating curve with the inner part of rim (2) and median plane BB'.

**Patentansprüche**

1. Einstückiges Rad für Schienenfahrzeuge, insbesondere für Hochgeschwindigkeitszüge, mit einem Radreifen (2), der in Bezug auf seine Lauffläche (6) auf einer ihrer Seitenkarten in Vorsprung mit einem Spurkranz (3) versehen ist, mit einer Radnabe (4) und einem Radkörper (5), der Radreifer (2) und die Radnabe (4) sind seitlich durch ebene Flächen, die zueinander in Bezug auf eine gemeinsame mittlere

EP 0 555 606 B1

Radialebene (BB'), die rechtwinklig zur Achse (AA') des Rades ist, symmetrisch sind, begrenzt, und wobei der Radkörper (5) dezentriert ist, das heißt in Bezug auf die genannte mittlere Radialebene (BE') nicht symmetrisch ist,
**dadurch gekennzeichnet**,
daß im axialen Querschnitt die Verbindungszone zwischen dem Radkörper (5) und dem Radreifen (2), ebenso wie der Punkt (C) des Zusammentreffens der Kurvenerzeugenden des Radkörpers (5) mit der Erzeugenden (2') des inneren Abschnittes des Radreifen (2) in Bezug auf die mittlere Radialebene der dem Spurkranz (3) gegenüberliegenden Seite angeordnet sind, und dadurch, daß die Verbindungszone zwischen dem Radkörper (5) und der Radnabe (4), ebenso wie der Punkt (D) des Zusammentreffens der Kurvenerzeugenden des Radkörpers (5) mit der Außenfläche der Radnabe (4) in Bezug auf die mittlere Radialebene derselben Seite des Spurkranzes (3) angeordnet sind.

2. Rad nach Anspruch 1, dadurch gekennzeichnet, daß die Kurvenerzeugende des Radkörpers (5) einen Wendepunkt (I) aufweist, und dadurch, daß die Position des Wendepunktes (I) charakterisiert ist durch die Relationen:

   $l/L > 1/2$, $h/H < 1/2$,

   wobei l die radiale Entfernung des Wendepunktes I zur Außenfläche der Radnabe (4) ist, L die radiale Entfernung zwischen der Außenfläche der Radnabe (4) und der inneren Partie des Radreifens (2) ist, h die axiale Entfernung des Wendepunktes I zu einer rechtwinklig zur Radachse (AA') stehenden Ebene ist und durch den Punkt C des Zusammentreffens der Kurvenerzeugenden des Radkörpers (5) mit der inneren Partie des Radreifens (2) läuft und H die Entfernung des Punktes (D) des Zusammentreffens der Kurvenerzeugenden des Radkörpers (5) mit der Außenfläche der Radnabe (4) in der rechtwinklig zur Radachse (AA') laufenden Ebene ist, die durch den Punkt (C) des Zusammentreffens der Kurvenerzeugenden des Radkörpers (5) mit der inneren Partie des Radreifens (2) läuft.

3. Rad nach Anspruch 2, dadurch charakterisiert, daß die Kurvenerzeugende des Radkörpers (5) eine Kurve der Gleichung :

$$Y = Y_c + (x - L)^2 \left( \frac{H}{L^3} (2x + L) + x^2 (\alpha x + \beta) \right)$$

ist, wobei $\alpha$ und $\beta$ Lösungen des Systems zweier Gleichungen mit zwei Unbekannten sind:

$$\alpha \, l \, (10 \, l^2 - 12 \, l \, L + 3 \, L^2) + \beta \, (6 \, l^2 - 6 \, l \, L + L^2) = \frac{3H}{L^2} \left( 1 - \frac{2l}{L} \right).$$

$$l^3 \, \alpha + l^2 \, \beta = \frac{h}{(L-l)^2} - \frac{H}{L^3} (2l + L)$$

wobei x die radiale Entfernung eines Punktes der Kurvenerzeugenden zur Außenfläche der Radnabe (4) ist, wobei y die algebraische Entfernung eines Punktes der Kurvenerzeugenden in axialer Richtung des Rades, in Mittelebene (BB') der Radnabe (4) und des Radreifens (2) ist, und wobei $y_c$ die algebraische Entfernung in axialer Entfernung zwischen dem Punkt C des Zusammentreffens der Kurvenerzeugenden mit der inneren Partie des Radreifens (2) und der Mittelebene (BB') ist.

7